# EUROPÄISCHE PATENTANMELDUNG

(11) **EP 1 487 074 A1**
(43) Veröffentlichungstag der Anmeldung: **15.12.2004**
(21) Anmeldenummer: 03405421.3
(22) Anmeldetag: 11.06.2003
(51) Int. Cl.: H02G 15/068, H02G 15/184

(54) **Hüllkörper für ein Hochspannungskabel und Verfahren zu seiner Herstellung**

(71) Anmelder: ABB RESEARCH LTD., 8050 Zürich (CH)
(72) Erfinder: Svahn, Jorgen, 441 35 Alingsas (SE); Gramespacher, Hansjoerg, 5443 Niederrohrdorf (CH); Christen, Thomas, 5413 Birmenstorf (CH); Strümpler, Ralf, 5412 Gebenstorf (CH)
(74) Vertreter: ABB Patent Attorneys

(57) **Zusammenfassung**

Der Körper (1) zum Umhüllen einer Hochspannungsdurchführung oder eines Endes, einer Abzweigung oder einer Verbindungsstelle eines Hochspannungskabels weist ein Feldsteuerungselement (3) mit einer nichtlinearen Strom-Spannungs-Kennlinie auf. Das Feldsteuerungselement (3) weist mindestens einen längs einer Achse (2) erstreckten Hohlkörperabschnitt auf. Der der elektrischen Isolation und der Feldsteuerung dienende Hüllkörper (1) kennzeichnet sich dadurch, dass er mindestens zwei Teilkörper (1a,1b) aufweist, welche je ein Feldsteuerungs-Teilelement(3a,3b) des Feldsteuerungselementes (3) aufweisen, wobei die Feldsteuerungs-Teilelemente (3a,3b) je einen längs der Achse (2) erstreckten Hohlkörperabschnitt aufweisen, und wobei die mindestens zwei Teilkörper(1a,1b) derart zusammensteckbar sind, dass sich die Hohlkörperabschnitte der Feldsteuerungs-Teilelemente (3a,3b) in einem Überlappbereich (5) überlappen. Vorzugsweise werden die Feldsteuerungs-Teilelemente (3a,3b) im Spritzgussverfahren aus einem Polymer mit einem Mikrovaristoren aufweisenden Füllstoff hergestellt. Zur Herstellung unterschiedlich ausgebildeter Feldsteuerungs-Teilelemente (3a.3b) kann dieselbe Giessform benutzt werden.

## Beschreibung

### Technisches Gebiet

Die Erfindung bezieht sich auf das Gebiet der Hochspannungstechnik, genauer auf einen Körper zum Umhüllen einer Hochspannungsdurchführung oder eines Endes, einer Abzweigung oder einer Verbindungsstelle eines Hochspannungskabels gemäss dem Oberbegriff des Patentanspruches 1. Sie bezieht sich weiter auf eine Vorrichtung und ein Verfahren zur Herstellung eines solchen Hüllkörpers gemäss dem Oberbegriff der weiteren unabhängigen Patentansprüche.

### Stand der Technik

Ein derartiger Hüllkörper ist beispielsweise aus der noch nicht veröffentlichten europäischen Patentanmeldung mit der Anmeldenummer 02405124.5 bekannt. Dort ist ein Kabelendverschluss für ein Hochspannungskabel offenbart, welcher aus einem isolierenden Tragkörper und einem Feldsteuerelement besteht. Das schlauchförmig ausgebildete Feldsteuerelement besteht aus einem Feldsteuerungmaterial auf Basis eines Polymers und eines in das Polymer eingebetteten und Mikrovaristoren enthaltenden Füllstoffs und weist eine nichtlineare Strom-Spannungs-Kennlinie auf. Die Hauptaufgaben eines solchen Hüllkörpers sind, sowohl eine elektrische Isolation eines in den Hüllkörpers einbringbaren Hochspannungskabel-Abschnittes als auch eine sichere Feldsteuerung zu erreichen. Der Kabelendverschluss ist elastisch ausgebildet und weist im auf einem Hochspannungskabel montierten Zustand eine veränderte Innenabmessung auf. Dadurch wird ein dichtes Umschliessen des Hochspannungskabels durch den Hüllkörper und eine gute Feldsteuerung erreicht.

Das Aufbringen eines derartigen Hüllelementes auf ein Hochspannungskabel ist schwierig, da die Innenabmessungen des Hüllelementes und die Aussenabmessungen des Hochspannungskabels ähnlich sind. Ein grosser Kraftaufwand, welcher zudem die Gefahr einer Beschädigung des Kabels und/oder des Hüllkörpers birgt, ist zur Montage des Hüllkörpers erforderlich.

### Darstellung der Erfindung

Es ist deshalb Aufgabe der Erfindung, einen Körper zum Umhüllen einer Hochspannungsdurchführung oder eines Endes, einer Abzweigung oder einer Verbindungsstelle eines Hochspannungskabels der eingangs genannten Art zu schaffen, welcher die oben genannten Nachteile nicht aufweist. Weiter soll eine Vorrichtung und ein Verfahren zur Herstellung eines derartigen Hüllkörpers geschaffen werden.

Diese Aufgabe lösen ein Hüllkörper, eine Vorrichtung und ein Verfahren mit den Merkmalen der unabhängigen Patentansprüche.

Der erfindungsgemässe Körper zum Umhüllen einer Hochspannungsdurchführung oder eines Endes, einer Abzweigung oder einer Verbindungsstelle eines Hochspannungskabels weist ein Feldsteuerungselement mit einer nichtlinearen Strom-Spannungs-Kennlinie auf, und das Feldsteuerungselement weist mindestens einen längs einer Achse erstreckten Hohlkörperabschnitt auf. Der Hüllkörper kennzeichnet sich dadurch, dass er mindestens zwei Teilkörper aufweist, welche je ein Feldsteuerungs-Teilelement des Feldsteuerungselementes aufweisen, wobei die Feldsteuerungs-Teilelemente je einen längs der Achse erstreckten Hohlkörperabschnitt aufweisen, und wobei die mindestens zwei Teilkörper derart zusammensteckbar sind, dass sich die Hohlkörperabschnitte der Feldsteuerungs-Teilelemente in einem Überlappbereich überlappen.

Durch die Mehrteiligkeit des Hüllkörpers müssen zwei Teile statt eines Teiles auf ein zu umhüllendes Hochspannungskabel aufgeschoben werden. Aber der vor allem reibungsbedingt auftretende Aufschiebewiderstand für jeden der Teilkörper ist geringer als der bei einem einteiligen Hüllkörper auftretende, da die Länge jedes der Teilkörper geringer gewählt werden kann als die Länge eines einteiligen Hüllkörpers, welcher vergleichbare elektrische Eigenschaften aufweist. Die Teilkörper können nach dem Stecker-Buchse-Prinzip zusammensteckbar sein.

Das Überlappen der Feldsteuerungs-Teilelemente in einem Überlappbereich ermöglicht eine gute und sichere Feldsteuerung. Ohne eine Überlappung der Feldsteuerungs-Teilelemente könnten radial ausgerichtete elektrische Felder nicht ausreichend gut von den Feldsteuerungs-Teilelementen gesteuert werden, so dass Durchschläge aufträten.

Ein weiterer Vorteil eines erfindungsgemässen Hüllkörpers ist, dass dieser für Feldsteuerungsaufgaben bei Kabeln und Durchführungen eines grossen Bereichs von Kabel- beziehungsweise Durchführungsdurchmessern einsetzbar ist.

Bevorzugt verläuft im zusammengesteckten Zustand in dem Überlappbereich der minimale Kriechweg von dem Hohlkörperabschnitt des Feldsteuerungselementes durch das Feldsteuerungselement hindurch sowohl radial als auch axial zwischen den zwei Feldsteuerungs-Teilelementen. Es wird dadurch ein Kriechweg erzeugt, der länger ist als radiale Dicke des Feldsteuerungselementes in dem Überlappbereich. Dadurch wird es möglich, eine bessere Feldsteuerung und eine grössere Durchschlagsfestigkeit zu erreichen. Ein ausschliesslich radial verlaufender minimaler Kriechweg hätte als Länge die radiale Dicke des Feldsteuerungselementes.

Erfindungsgemäss weist der Kriechweg mindestens eine axiale Komponente auf. Beispielsweise kann der minimale Kriechweg diagonal zwischen axialer und radialer Richtung oder auch stufenförmig verlaufen.

In einer bevorzugten Ausführungsform des Erfindungsgegenstandes sind die Feldsteuerungs-Teilelemente in dem Überlappbereich einander angeformt. Dadurch ergibt sich eine besonders gut Feldsteuerung, denn der minimale Kriechweg im Überlappbereich verläuft dann innerhalb des Feldsteuerungselementes (zwischen den Feldsteuerungs-Teilelementen), so dass aufgrund der nichlinearen Strom-Spannungs-Kennlinie keine hohen Felder im Überlappbereich auftreten können.

In einer weiteren bevorzugten Ausführungsform des Erfindungsgegenstandes ist die Innenabmessung mindestens eines der Hohlkörperabschnitte nach dem Aufbringen des Hüllkörpers auf das Hochspannungskabel verändert, insbesondere ist dieser Hohlkörperabschnitt elastisch verformbar ausgebildet. Besonders vorteilhaft ist nach dem Aufbringen des Hüllkörpers auf das Kabel die Innenabmessung des Hohlkörperabschnittes in Abhängigkeit von der Lage auf der Achse infolge Dehnung des Hohlkörperabschnitts unterschiedlich verändert. Solche Hüllkörper und entsprechende Feldsteuerungselemente oder Feldsteuerungs-Teilelemente erzielen eine gute Feldsteuerung. Insbesondere bei Verwendung von Feldsteuerungsmaterialien auf Polymerbasis mit einem Mikrovaristoren enthaltenden Füllstoff können von der lokalen Dehnung des Feldsteuerungselementes in vorteilhafter Weise abhängige elektrische Eigenschaften des Feldsteuerungselementes erzeugt werden.

In einer bevorzugten Ausführungsform des Erfindungsgegenstandes weist der Hüllkörper einen Isolationskörper aus Isoliermaterial auf, wobei das Feldsteuerungselement in eine Innenfläche des Isolationskörpers eingeformt ist. Der Isolationskörper kann vorteilhaft als Beschirmung wirken. Besonders vorteilhaft weist jeder der Teilkörper je einen lsolations-Teilkörper auf, in welche je ein Feldsteuerungs-Teilelement eingeformt ist. Ein solcher Hüllkörper weist also zwei, drei oder mehr Teilkörper auf, die je ein Feldsteuerungs-Teilelement und einen Isolations-Teilkörper aufweisen. Solche Teilkörper sind einzeln herstellbar und handhabbar. Sie können einzeln, sequentiell auf eine Durchführung oder ein Hochspannungskabel aufgebracht werden.

Besonders vorteilhaft sind die Isolations-Teilkörper ausserdem noch derart ausgebildet, dass sie derart zusammensteckbar sind, dass sie sich überlappen. Vorteilhaft sind sie dort, wo sie sich überlappen, aneinander angeformt. Dies ergibt eine gute Isolation.

In einer weiteren vorteilhaften Ausführungsform weisen die Teilköper einen durch das Zusammenstecken elastisch verformbaren Haltemechanismus auf, durch welchen die Teilköper in der zusammengesteckten Position gehalten werden. Insbesondere wird der Haltemechanismus von den Feldsteuerungs-Teilelementen und/oder von den Isolations-Teilkörpern gebildet. Ein derartiger Halte- oder Verschlussmechanismus kann beispielsweise durch Einhaken oder Einrasten des einen Teilkörpers in einen anderen realisiert werden. Dies ermöglicht eine sichere gegenseitige Fixierung der Teilelemente und eine hohe mechanische Stabilität des Hüllkörpers, insbesondere gegen axiale Kräfte.

Die erfindungsgemässe Vorrichtung zur Herstellung eines erfindungsgemässen Hüllkörpers mit einem Gussverfahren beinhaltet eine Giessform mit einer Achse, wobei die Giessform einen Mantel und einen Kern aufweist, welche beide entlang der Achse ausrichtbar sind, so dass sie einen Zwischenraum bilden, in welchen ein Feldsteuerungsmaterial giessbar ist.

Die Vorrichtung kennzeichnet sich dadurch dass ein erstes und ein zweites Aussparungselement vorgesehen sind, welche in den zwischen dem Mantel und dem Kern gebildeten Zwischenraum einbringbar sind, wobei die Aussparungselemente derart ausgebildet sind, dass Feldsteuerungs-Teilelemente, bei deren Giessen das erste Aussparungselement zwischen dem Mantel und dem Kern angeordnet ist, in der genannten Art mit Feldsteuerungs-Teilelementen zusammensteckbar sind, bei deren Giessen das zweite Aussparungselement zwischen dem Mantel und dem Kern angeordnet ist.

Oft sind zwei zusammensteckbare Teilkörper verschiedenartig ausgebildet. In diesem Fall bedarf es bei der erfindungsgemässen Herstellungsvorrichtung nur einer Giessform, mittels der beide Teilkörper, insbesondere beide Feldsteuerungs-Teilelemente, gegossen werden. Eine teure und aufwendige Herstellung einer zweiten, andersartigen Giessform, kann so vermieden werden. Derjenige Teil der Feldsteuerungs-Teilelemente, welcher charakteristisch für das jeweilige Teilelement ist und im allgemeinen die Zusammensteckbarkeit bewirkt, wird erfindungsgemäss mittels eines von mindestens zwei Aussparungselementen geformt, indem das entsprechende Aussparungselement zwischen Mantel und Kern der Giessform eingebracht wird. Auf einfache und kostengünstige Weise kann so ein erfindungsgemässer Hüllkörper gegossen werden. Zudem kann mit geringem Aufwand das Design der Teilkörper verändert werden, indem andere Aussparungselemente verwendet werden, während die Giessform dieselbe bleiben kann.

In dem erfindungsgemässen Verfahren zur Herstellung eines Körpers zum Umhüllen einer Hochspannungsdurchführung oder eines Endes, einer Abzweigung oder einer Verbindungsstelle eines Hochspannungskabels wird eine eine Achse aufweisende Giessform eingesetzt, welche einen Mantel und einen Kern aufweist, welche beide entlang der Achse ausrichtbar sind. Der Hüllkörper weist ein Feldsteuerungselement aus einem Feldsteuerungsmaterial auf, wobei das Feldsteuerungselement eine nichtlineare Strom-Spannungs-Kennlinie und einen längs der Achse erstreckten Hohlkörperabschnitt aufweist. Das Feldsteuerungsmaterial wird in einen zwischen dem Mantel und dem Kern gebildeten Zwischenraum gegossen und anschliessend gehärtet.

Das erfindungsgemässe Verfahren kennzeichnet sich dadurch , dass
- zur Erstellung eines einen Hohlkörperabschnitt aufweisenden ersten Feldsteuerungs-Teilelementes eines ersten Teilkörpers des Hüllkörpers zunächst ein erstes Aussparungselement zwischen dem Kern und dem Mantel eingebracht wird, und dann das Feldsteuerungsmaterial in den Zwischenraum gegossen wird, und
- zur Erstellung eines einen Hohlkörperabschnitt aufweisenden zweiten Feldsteuerungs-Teilelementes eines zweiten Teilkörpers des Hüllkörpers zunächst ein zweites Aussparungselement zwischen dem Kern und dem Mantel der Giessform oder zwischen dem Kern und dem Mantel einer gleichartigen Giessform eingebracht wird, und dann das Feldsteuerungsmaterial in den Zwischenraum der Giessform der gleichartigen Giessform gegossen wird,
wobei derartig ausgebildete Aussparungselemente eingebracht werden, dass die gehärteten Feldsteuerungs-Teilelemente in einer solchen Art zusammensteckbar sind, dass sich die Hohlkörperabschnitte der Feldsteuerungs-Teilelemente in einem Überlappbereich überlappen.

Dadurch wird es möglich, mit geringem Materialaufwand (betreffend die Giessform) einen erfindungsgemässen Hüllkörper zu erstellen.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen schematisch im axialen Schnitt:
- Fig. 1: einen zweiteiligen Hochspannungs-Kabelabschluss;
- Fig.2: ein Kabelelement mit einem zweiteiligen Hochspannungs-Kabelabschluss, im nicht zusammengesteckten Zustand;
- Fig. 3: ein Kabelelement gemäss Fig. 2, im zusammengesteckten Zustand;
- Fig. 4: eine Giessform mit erstem Aussparungselement;
- Fig. 5: die Giessform gemäss Fig. 4 mit zweitem Aussparungselement

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Die beschriebenen Ausführungsbeispiele stehen beispielhaft für den Erfindungsgegenstand und haben keine beschränkende Wirkung.

### Wege zur Ausführung der Erfindung

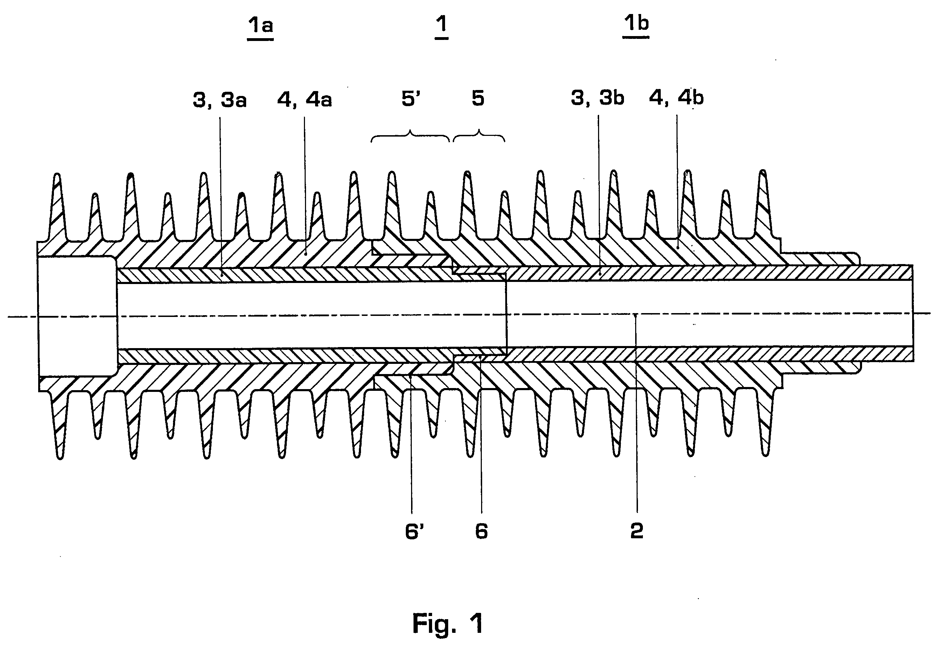

Fig. 1 zeigt schematisch im Schnitt einen zweiteiligen Hochspannungs-Kabelabschluss 1 gemäss der Erfindung. Der Hüllkörper 1 weist einen Hohlkörperabschnitt zur Aufnahme eines Teiles eines Hochspannungskabels oder eines Teiles der Hochspannungsdurchführung auf. Der Hüllkörper 1 in Fig. 1 beinhaltet zwei Teilkörper 1a,1b, welche zusammensteckbar sind. Beide Teilkörper 1a,1b weisen ein Feldsteuerungs-Teilelement 3a beziehungsweise 3b und einen Isolations-Teilkörper 4a beziehungsweise 4b auf. Die schlauchförmigen Teilelemente 3a,3b bilden zusammen ein Feldsteuerungselement 3 des Kabelabschlusses 1 und erstrecken sich entlang einer Achse 2, und die sich ebenfalls entlang der Achse 2 erstreckenden Isolations-Teilkörper 4a,4b bilden zusammen einen Isolationskörper 4 des Kabelabschlusses 1. Der Hüllkörper 1 ist rotationssymmetrisch mit der Achse 2 als Rotationsachse.

In dem dargestellten zusammengesteckten Zustand überlappen sich die Feldsteuerungs-Teilelemente 3a,3b in einem axial erstreckten Überlappungsbereich 5. Die Feldsteuerungs-Teilelemente 3a,3b haben ausserhalb des Überlappungsbereiches 5 die gleiche radiale Dicke und sind derart ausgebildet, dass sich ihre radialen Dicken im Überlappungsbereich 5 zu dieser Dicke ergänzen. Im Überlappungsbereich 5 weist dazu das erste Teilelement 3a ein verringertes Aussenmass und das zweite Teilelement 3b ein vergrössertes Innenmass auf. In Fig. 1 sind die radialen Dicken der zwei Teilelemente 3a,3b im Überlappungsbereich 5 gleich gross.

Der Isolationskörper 4 wirkt als Isolation und Beschirmung. Seine zwei Isolations-Teilkörper 4a,4b überlappen sich in einem Überlappungsbereich 5', welcher in Fig. 1 von dem Überlappungsbereich 5 verschieden, aber an diesen angrenzend ist. In ihrem Überlappbereich 5' sind die Isolations-Teilkörper 4a,4b, wie die Feldsteuerungs-Teilelemente 3a,4a, stufenförmig ausgebildet. Vorteilhaft ist der Isolationskörper 4 elastisch verformbar. Das Feldsteuerungselement 3 ist in eine Innenfläche des Isolationskörpers 4 eingeformt.

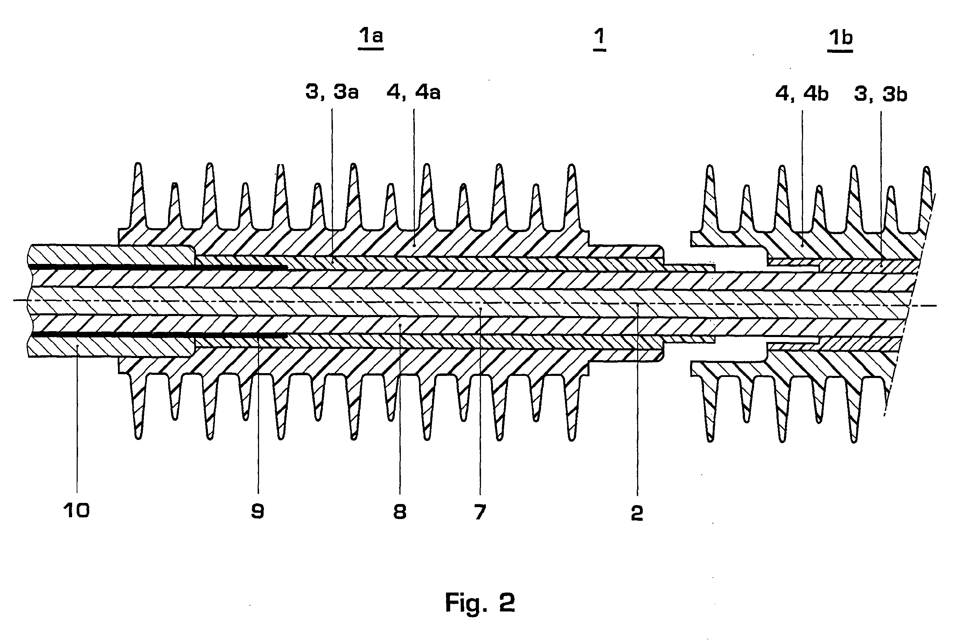

Fig. 2 zeigt schematisch im Schnitt die Teilkörper 1a, 1b eines Hochspannungs-Kabelabschlusses 1 gemäss Fig. 1 in fast fertig auf einem Hochspannungskabel montiertem Zustand. Das Hochspannungskabel weist auf: einen Kabelleiter 7, eine Kabelisolation 8, eine Beschichtung 9 und eine Kabelschirmung 10. Die Beschichtung 9 ist vorzugsweise halbleitend und dient der Abschirmung des Kabels. Die Kabelschirmung 10 ist metallisch, vorzugsweise ein Drahtgeflecht und dient ebenfalls der Abschirmung des Kabels. Die Kabelschirmung 10 und die Beschichtung 9 sind teilweise abgetragen, wobei die Beschichtung 9 die Kabelschirmung 10 überragt. Der Hüllkörper 1, genauer: der Teilkörper 1a, ist auf einer von der Kabelschirmung 10, der Beschichtung 9 und der Kabelisolation 8 gebildeten Mantelfläche aufgebracht. Und zwar derart, dass die Beschichtung 9 mit dem Feldsteuerungs-Teilelement 3a verbunden ist.

Weitere Details dazu, wie ein Hüllkörper 1, insbesondere im Bereich der Überlappung von Hüllkörper 1 und Beschichtung 9, ausgebildet sein kann, können beispielsweise der gennannten noch nicht veröffentlichten europäischen Patentanmeldung mit der Anmeldenummer 02405124.5 entnommen werden. Der Offenbarungsgehalt dieser Publikation ist hiermit ausdrücklich in die Beschreibung übernommen.

Für die Montage werden die Teilkörper 1a,1b nacheinander auf das Hochspannungskabel geschoben und zusammengesteckt.

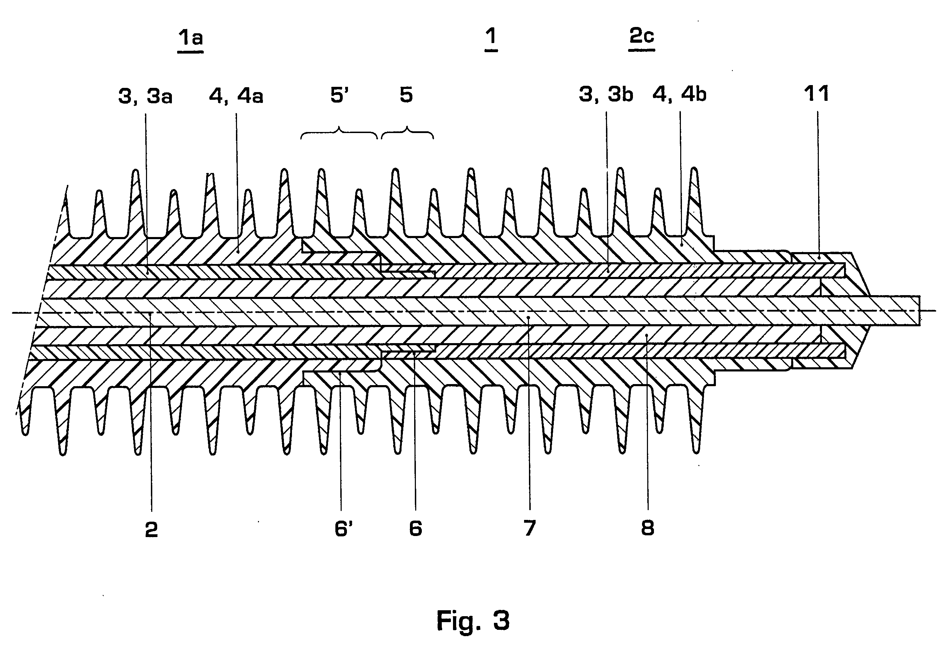

In Fig. 3 ist der Hüllkörper aus Fig. 2 fertig montiert schematisch dargestellt. Die Teilkörper 1 a,1b sind zusammengeschoben. Ausserdem ist noch eine Abschlusskappe 11 auf das dem ersten Teilkörper 1 a abgewandten Ende des zweiten Teilkörpers 1 b aufgebracht, so dass mittels der Abschlusskappe 11 der Kabelleiter 7 via dem Feldsteuerungselement 3 und der Beschichtung 9 mit der Kabelschirmung 10 verbunden ist. Ausserdem dient die Abschlusskappe 11 als Dichtschutz gegen das Eindringen von Partikeln oder Feuchtigkeit in das von dem Hochspannungskabel und dem Hüllkörper 1 gebildete Kabelelement. In dem in Fig. 3 dargestellten Beispiel ist die Abschlusskappe 11 nichtleitend ausgeführt, da das Hochspannungskabel ein Wechselspannungskabel ist. Elektrisch leitende Abschlusskappen, welche für Gleichspannungskabel notwendig und für Wechselspannungskabel möglich sind, können ebenfalls genommen werden.

Das Kabelelement der Figs. 2 und 3 bildet einen Hochspannungs-Kabelabschluss. Ein erfindungsgemässer Hüllkörper kann in analoger Weise für Abzweigungen oder Verbindungsstellen von Hochspannungskabeln oder in einer Hochspannungsdurchführung eingesetzt werden.

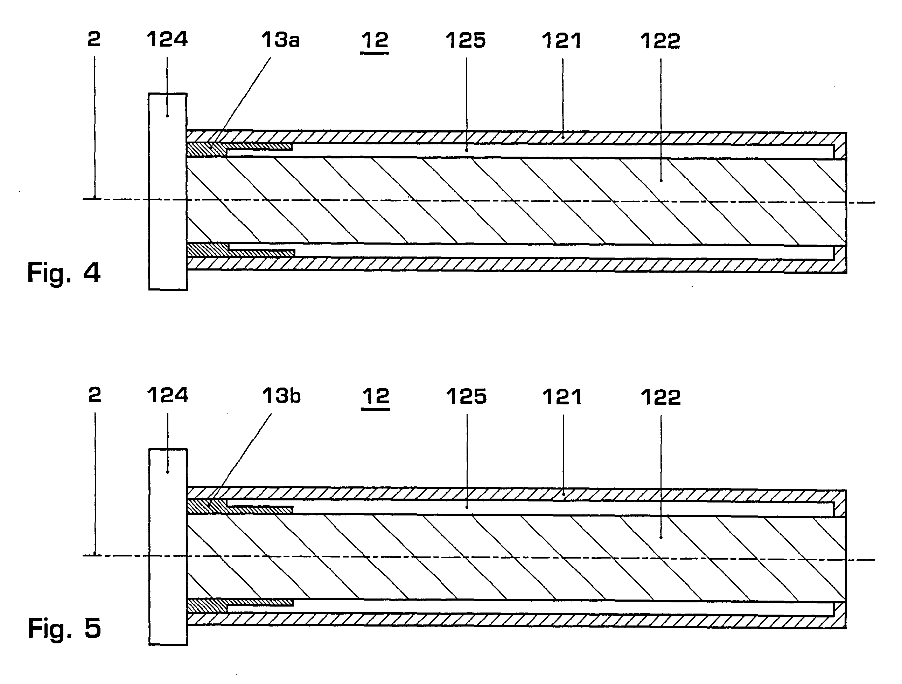

Die Feldsteuerungs-Teilelemente 3a,3b und auch die Isolations-Teilkörper 4a,4b werden vorteilhaft in einem Giessverfahren, insbesondere einem Spritzgussverfahren hergestellt. In den Figs. 4 und 5 ist eine Giessform 12 schematisch im Schnitt dargestellt, mittels der die in den Figs. 1-3 dargestellten Feldsteuerungs-Teilelemente 3a beziehungsweise 3b gegossen werden können. Die Giessform 12 weist einen entlang der Achse 2 erstreckten, stabförmigen Kern 122 auf, welcher mit einem Giessformboden 124 verbunden ist. Weiter weist die Giessform 12 einen entlang der Achse 2 erstreckten Mantel 121 auf, welcher einen Hohlkörper einschliesst und ebenfalls mit dem Giessformboden 124 verbunden ist. Der Kern 122 ist zumindest teilweise innerhalb des Mantels 121 angeordnet. Der Giessformboden 124 kann auch mit dem Mantel 121 oder dem Kern 122 einstückig ausgebildet sein. Zwischen dem Kern 122 und dem Mantel 1 21 ist ein schlauchförmiger Zwischenraum 125 ausgebildet, in welchen ein Feldsteuerungsmaterial einspritzbar ist.

Die gleiche Giessform 12 kann für die Herstellung der im allgemeinen unterschiedlich geformten Feldsteuerungs-Teilelemente benutzt werden. Dazu können in den Zwischenraum 125 Aussparungselemente 13a und 13b eingebracht werden. In den Figs. 4 und 5 sind die Aussparungselemente 13a,13b als Ringe ausgeführt, welche jeweils einen axialen Bereich aufweisen, in welchem das Innenmass des Rings vergrössert beziehungsweise das Aussenmass des Rings verringert ist. Dadurch ergibt sich die in den Figs. 1-3 gezeigte stufenförmige Ausbildung der Feldsteuerungs-Teilelemente 3a beziehungsweise 3b in dem Überlappbereich 5. Die Aussparungselemente 13a,13b bewirken somit die unterschiedliche Ausbildung der Feldsteuerungs-Teilelemente 3a,3b im Überlappbereich 5. Vorteilhaft können die Aussparungselemente 13a,13b zumindest an ihrer Oberfläche aus Teflon sein.

Vorteilhaft wird als Feldsteuerungsmaterial ein Polymer verwendet, welches einen Mikrovaristoren enthaltenden Füllstoff enthält. Beispielsweise ein Silikon, in das beispielsweise mittels einer Mischwalze typischerweise zwischen 40 Gew.-% und 95 Gew.-% Mikrovaristor-Partikel eingebracht sind. Derartige Mikrovaristor-Partikel bestehen vorteilhaft aus dotiertem ZnO, welches bei Temperaturen zwischen 950 °C und 1300° C gesintert ist. Nach dem Einspritzen des Feldsteuerungsmaterials wird dieses gehärtet, das heisst im Falle des Polymers wird es vernetzt. Vorteilhaft wird das Material dazu auf eine Temperatur typischerweise zwischen 145°C und 190°C erhitzt. Weitere mögliche Feldsteuerungsmaterialien können der genannten noch nicht veröffentlichten europäischen Patentanmeldung mit der Anmeldenummer 02405124.5 sowie den folgenden, hiermit mit ihrem gesamten Offenbarungsgehalt in die Beschreibung übernommenen Schriften entnommen werden:
- EP 0 6459 150 B1
- US 6,469,611 B1
- EP 1 274 102 A1
- EP 1 188 210 B1
- R. Strümpler et al., "Smart varistor composites", Intelligent Materials and Systems, ed. P. Vincenzini (TechnaSrl, 1995) p. 15-22
- B. Boettcher et al., "Stress control system for composite insulators based on ZnO-Technology", IEEE 0-7803-7287-5/01 (2001)

Die Isolations-Teilkörper 4a,4b werden vorteilhaft ebenfalls in einem Spritzgussverfahren und aus einem Polymer, vorzugsweise Silikon, hergestellt. Bevorzugt werden die lsolations-Teilkörper in dem Giessverfahren auf die entsprechenden Feldsteuerungs-Teilelemente aufgebracht, welche vorteilhaft zumindest im Überlappbereich 5 mit Aussparungselementen, wie beispielsweise den in den Figs. 4 und 5 dargestellten, versehen sind, so dass die Form der Feldsteuerungs-Teilelemente im Überlappbereich 5 während des Giessens und Aushärtens des lsolations-Teilkörpers im wesentlichen erhalten bleibt.

Zum Giessen der Isolations-Teilkörper 4a,4b können zwecks Erzeugung verschiedenartiger Formen zweier zusammensteckbarer Isolations-Teilkörper 4a,4b im Überlappbereich 5' analog zum Giessen der Feldsteuerungs-Teilelemente 3a,3b verschiedene Aussparungselemente und die gleiche (oder eine gleichartige) Giessform verwendet werden. Die in den Figs. 1-3 dargestellten lsolations-Teilkörper 4a,4b sind mittels nur einer Giessform herstellbar, wobei die Geometrie des Mantels derart gewählt ist, dass das eine Ende eines mit der Giessform hergestellten lsolations-Teilkörpers mit dem anderen Ende eines mit der gleichen Giessform hergestellten Isolations-Teilkörpers zusammensteckbar ist, wobei ausserdem noch das eine Ende derart geformt ist, dass dort, wie in Fig. 2 gezeigt, der mit der Kabelschirmung versehene Teil des Hochspannungskabels aufnehmbar ist.

Es ist einerseits möglich, Teilkörper derart zu gestalten, dass gleichartige Teilkörper zusamensteckbar sind; dass also solche Teilkörper ein erstes und ein zweites Ende aufweisen, wobei ein erstes Ende jeweils mit einem zweiten Ende zusammensteckbar ist. Andererseits können auch zwei verschiedenartig geformte Teilkörper derart gestaltet werden, dass jeder der Teilkörper zwei gleichartige Enden aufweist, so dass diese zwei Arten von Teilkörpern in alternierender Reihenfolge zusammensteckbar sind.

Um eine besonders gute Verbindung zwischen zwei Teilkörpern 1a, 1b zu erreichen, kann ein Haltemechanismus vorgesehen sein, beispielsweise indem statt einer einfachen Stufenform gemäss Figs. 1-3 im Übergangsbereich 6' eine Nase in dem ersten Isolations-Teilkörper 4a und eine dazu passende Nut in dem zweiten Isolations-Teilkörper 4b vorgesehen ist, so dass die Isolations-Teilkörper 4a,4b einander eingeformt sind und während des Zusammensteckens der Teilkörper 1a,1b elastisch verformt werden und im zusammengesteckten Zustand ineinandergreifen und so eine sichere Verbindung der Teilkörper sicherstellen.

Typische Dimensionen von erfindungsgemässen Hüllkörpern und Kabelelementen sind:
- Dauerhaft am Kabelleiter des Hochspannungskabels anliegende Spannung: ≥ 50 kV, ≥ 72 kV, bis über 100 kV oder über 120 kV
- Durchmesser des Hochspannungskabels: ≥ 40 mm, ≥ 50 mm, ≥ 60 mm
- Durchmesser des Kabelleiters: ≥ 500 mm², ≥ 1000 mm²
- axiale Länge der Teilkörper: ≥ 300 mm, ≥ 450 mm
- radiale Dicke des Feldsteuerungselementes: grösser als 2 mm oder grösser als 3 mm, gegebenenfalls grösser als 4 mm; zur Sicherstellung einer ausreichend grössen Leitfähigkeit zur Aufnahme von Verschiebungsströmen; hängt ab von den den elektrischen Eigenschaften des Feldsteuerungsmaterials
- axiale Länge des Überlappbereichs der Fefdsteuerungs-Teilelemente: ≥ 25 mm, ≥ 40 mm, ≥ 55 mm
- axiale Länge des Überlappbereichs der lsolations-Teilkörper: ≥ 40 mm, ≥ 60 mm, ≥ 80 mm
- axiale Länge eines Bereiches, in dem die Beschichtung des Hochspannungskabels mit dem Feldsteuerungselement in Kontakt ist: ≥ 40 mm, ≥ 60 mm

### Bezugszeichenliste

- 1: Hüllkörper
- 1a, 1b: Teilkörper
- 2: Achse
- 3: Feldsteuerungselement
- 3a,3b: Feldsteuerungs-Teilelemente
- 4: Isolationskörper
- 4a,4b: Isolations-Teilkörper
- 5,5': Überlappbereich
- 6,6': Kriechweg
- 7: Kabelleiter
- 8: Kabelisolation
- 9: Beschichtung
- 10: Kabelschirmung
- 11: Abschlusskappe
- 12: Giessform
- 121: Mantel
- 122: Kern
- 124: Giessformboden
- 125: Zwischenraum
- 13a: erstes Aussparungselement
- 13b: zweites Aussparungselement

## Patentansprüche

1. Körper (1) zum Umhüllen einer Hochspannungsdurchführung oder eines Endes, einer Abzweigung oder einer Verbindungsstelle eines Hochspannungskabels, aufweisend ein Feldsteuerungselement (3) mit einer nichtlinearen Strom-Spannungs-Kennlinie, welches Feldsteuerungselement (3) mindestens einen längs einer Achse (2) erstreckten Hohlkörperabschnitt aufweist, **dadurch gekennzeichnet, dass**
der Körper (1) mindestens zwei Teilkörper (1a, 1b) aufweist, welche je ein Feldsteuerungs-Teilelement (3a,3b) des Feldsteuerungselementes (3) aufweisen, wobei die Feldsteuerungs-Teilelemente (3a,3b) je einen längs der Achse (2) erstreckten Hohlkörperabschnitt aufweisen, wobei die mindestens zwei Teilkörper (1a,1b) derart zusammensteckbar sind, dass sich die Hohlkörperabschnitte der Feldsteuerungs-Teilelemente (3a,3b) in einem Überlappbereich (5) überlappen.

2. Hüllkörper (1) gemäss Anspruch 1, **dadurch gekennzeichnet, dass** im zusammengesteckten Zustand in dem Überlappbereich (5) der minimale Kriechweg von dem Hohlkörperabschnitt des Feldsteuerungselementes (3) durch das Feldsteuerungselement (3) hindurch radial und axial zwischen den zwei Feldsteuerungs-Teilelementen (3a,3b) verlaufend ausgebildet ist.

3. Hüllkörper (1 ) gemäss einem der vorangegangenen Ansprüche, **dadurch gekennzeichnet, dass** die Feldsteuerungs-Teilelemente (3a,3b) in dem Überlappbereich (5) einander angeformt sind.

4. Hüllkörper (1 ) gemäss einem der vorangegangenen Ansprüche, **dadurch gekennzeichnet, dass** die Innenabmessung mindestens eines der Hohlkörperabschnitte nach dem Aufbringen des Hüllkörpers (1) auf das Hochspannungskabel verändert ist, insbesondere dass dieser Hohlkörperabschnitt elastisch verformbar ausgebildet ist, insbesondere wobei nach dem Aufbringen des Hüllkörpers (1 ) auf das Kabel die Innenabmessung des Hohlkörperabschnittes in Abhängigkeit von der Lage auf der Achse (2) infolge Dehnung des Hohlkörperabschnitts unterschiedlich verändert ist.

5. Hüllkörper (1 ) gemäss einem der vorangegangenen Ansprüche, **dadurch gekennzeichnet, dass** das Feldsteuerungselement (3) ein Feldsteuerungselement auf Basis eines Polymers und eines in das Polymer eingebetteten und Mikrovaristoren enthaltenden Füllstoffs ist, insbesondere wobei die Mikrovaristoren durch Sintern, vorzugsweise durch Sintern metalloxiddotierter Zinkoxidpartikel, gebildet sind.

6. Hüllkörper (1) gemäss einem der vorangegangenen Ansprüche, **dadurch gekennzeichnet, dass** der Hüllkörper (1) einen Isolationskörper (4) aus Isoliermaterial aufweist, wobei das Feldsteuerungselement (3) in eine Innenfläche des Isolationskörpers (4) eingeformt ist, insbesondere wobei die Teilkörper (1 a,1b) je einen Isolations-Teilkörper (4a,4b) des Isolationskörpers (4) aufweisen, in welche Isolations-Teilkörper (4a,4b) je ein Feldsteuerungs-Teilelement (3a,3b) eingeformt ist.

7. Hüllkörper (1) gemäss Anspruch 6, wobei die Teilkörper (1a,1b) je einen Isolations-Teilkörper (4a,4b) des Isolationskörpers (4) aufweisen, **dadurch gekennzeichnet, dass** die lsolations-Teilkörper (4a,4b) zusammensteckbar sind, so dass sie sich überlappen, insbesondere dass die lsolations-Teilkörper (4a,4b) dort, wo sie sich überlappen, aneinander angeformt sind.

8. Hüllkörper (1) gemäss einem der vorangegangenen Ansprüche, **dadurch gekennzeichnet, dass** die Teilköper (1a,2a) einen durch das Zusammenstecken elastisch verformbaren Haltemechanismus aufweisen, durch welchen die Teilköper (1 a,2a) in der zusammengesteckten Position gehalten werden, insbesondere wobei der Haltemechanismus von den Feldsteuerungs-Teilelementen (3a,3b) und/oder von den Isolations-Teilkörpern (4a,4b) gebildet wird.

9. Vorrichtung zur Herstellung eines Hüllkörpers (1) gemäss einem der Ansprüche 1 bis 5 mit einem Gussverfahren, umfassend eine Giessform (12) mit einer Achse (2), welche Giessform (12) einen Mantel (121) und einen Kern (122) aufweist, welche beide entlang der Achse (2) ausrichtbar sind, so dass sie einen Zwischenraum (125) bilden, in welchen ein Feldsteuerungsmaterial giessbar ist,
**dadurch gekennzeichnet, dass**
ein erstes (13a) und ein zweites Aussparungselement (13b) vorgesehen sind, welche in den zwischen dem Mantel (121) und dem Kern (122) gebildeten Zwischenraum (125) einbringbar sind, wobei die Aussparungselemente (13a,13b) derart ausgebildet sind, dass Feldsteuerungs-Teilelemente (3a), bei deren Giessen das erste Aussparungselement (13a) zwischen dem Mantel (121) und dem Kern (122) angeordnet ist, in der genannten Art zusammensteckbar sind mit Feldsteuerungs-Teilelementen (3b), bei deren Giessen das zweite Aussparungselement (13b) zwischen dem Mantel (121) und dem Kern (122) angeordnet ist.

10. Verfahren zur Herstellung eines Körpers (1) zum Umhüllen einer Hochspannungsdurchführung oder eines Endes, einer Abzweigung oder einer Verbindungsstelle eines Hochspannungskabels, mittels einer eine Achse (2) aufweisenden Giessform (12), welche einen Mantel (121) und einen Kern (122) aufweist, welche beide entlang der Achse (2) ausrichtbar sind, und wobei der Hüllkörper (1) ein eine nichtlineare Strom-Spannungs-Kennlinie aufweisendes und einen längs der Achse (2) erstreckten Hohlkörperabschnitt aufweisendes Feldsteuerungselement (3) aus einem Feldsteuerungsmaterial aufweist,
wobei das Feldsteuerungsmaterial in einen zwischen dem Mantel (121) und dem Kern (122) gebildeten Zwischenraum (125) gegossen und anschliessend gehärtet wird,
**dadurch gekennzeichnet, dass**
zur Erstellung eines einen Hohlkörperabschnitt aufweisenden ersten Feldsteuerungs-Teilelementes (3a) eines ersten Teilkörpers (1a) des Hüllkörpers (1) zunächst ein erstes Aussparungselement (13a) zwischen dem Mantel (121) und dem Kern (122) eingebracht wird, und dann das Feldsteuerungsmaterial in den Zwischenraum (125) gegossen wird, und zur Erstellung eines einen Hohlkörperabschnitt aufweisenden zweiten Feldsteuerungs-Teilelementes (3b) eines zweiten Teilkörpers (1 b) des Hüllkörpers (1) zunächst ein zweites Aussparungselement (1 3b) zwischen dem Mantel (121 ) und dem Kern (122) eingebracht wird, und dann das Feldsteuerungsmaterial in den Zwischenraum (125) der Giessform (12) oder zwischen dem Mantel (121) und dem Kern (122) einer gleichartigen Giessform gegossen wird, wobei derartig ausgebildete Aussparungselemente (13a,13b) eingebracht werden, dass die gehärteten Feldsteuerungs-Teilelemente (3a,3b) in einer solchen Art zusammensteckbar sind, dass sich die Hohlkörperabschnitte der Feldsteuerungs-Teilelemente (3a,3b) in einem Überlappbereich (5) überlappen.
